# EUROPEAN PATENT APPLICATION

(11) **EP 2 385 416 A2**
(43) Date of publication of application: **09.11.2011**
(21) Application number: 11158630.1
(22) Date of filing: 17.03.2011
(51) Int. Cl.: G02C 9/00

(54) **Mountable glasses**

(30) Priority: 07.05.2010 CN 201020201778 U
(71) Applicant: Chuen Fung Spectacles Services Manufactory Limited, Tseung Kwan O. Kowloon (CN)
(72) Inventor: Ling, Yan Keung, Kowloon (CN); Cheung, Hing Yuen, Kowloon (CN)
(74) Representative: von Kreisler Selting Werner

(57) **Abstract**

This invention relates to mountable glasses comprising first and second lenses, a bridge member adapted for joining the first and second lenses to form a unitary structure, the bridge member comprising a clamping means for mounting said bridge member to a bridge portion of a eyeglasses frame, the bridge member further comprises a locking means adapted for keeping the clamping means in a closed position. The locking means comprises a sliding member adapted for locking the bridge member to the bridge portion of the eyeglasses frame by moving the sliding member from a first position to a second position of the bridge member.

## Description

The present invention relates broadly to a mountable glasses. More specifically, the invention relates to an optical instrument having functional lenses adapted to be removably mounted on a eyeglasses frame.

People often need to wear sunglasses under any environment with strong sunlight. Originally, the sunglasses has two functional lenses and a bridge for connecting two functional lenses together. It also has two arms attached to positions adjacent to the sides of the functional lenses. If people wearing eyeglasses want to wear sunglasses for protecting their eyes from ultraviolet light, they have to take off their own eyeglasses before wearing their sunglasses.

In the field of existing technology, there are mountable glasses which can be directly mounted over eyeglasses to achieve the light filtration effect. These glasses are usually to attach sunglasses lenses on the eyeglasses frame externally through a fastening device. However, the fastening device is very complex in relation to their mechanical structures and is inconvenient to attach on the eyeglasses. Additionally, the clamping of the functional lenses of the fastening device is not reliable that it is easy to be dropped off.

The present invention provides a mountable glasses comprising first and second lenses, a bridge member adapted for joining the first and second lenses to form a unitary structure, the bridge member comprising a clamping means for mounting said bridge member to a bridge portion of a eyeglasses frame, the bridge member further comprises a locking means adapted for keeping the clamping means in a closed position.

Typically, the locking means comprises a sliding member adapted for locking the bridge member to the bridge portion of the eyeglasses frame by moving the sliding member from a first position to a second position of the bridge member.

Typically, the sliding member is adapted to move along a longitudinal concave region of the bridge member horizontally.

Typically, the bridge member further comprises a first clamping structure having a concave portion for receiving an extension of the sliding member such that the locking means is in a closed position when the locking member receives the extension.

Typically, the clamping means comprises the first clamping structure which is pivotally mounted to the bridge member.

Typically, the bridge member comprises a plurality of magnet receptacles for receiving cylindrical magnet members.

Typically, the first end of the first clamping structure is a convex structure which is adapted to be received by a concave structure of an end of the second clamping structure.

Typically, a second end of the first clamping structure is a L-shaped structure such that the second end of the first clamping structure can mount the bridge member to the bridge portion of the eyeglasses frame by covering a portion of the bridge portion covered by the L-shaped structure.

Typically, the clamping means further comprises a second clamping structure adapted for mounting the bridge member to a position of the bridge portion of the eyeglass frame removably mounted to the first clamping structure.

Typically, the flexible material having an aperture is mounted to an end of the second clamping structure such that the flexible material can provide a frictional force between contacting faces of said bridge portion of the eyeglasses frame and the first end of the second clamping structure in order to fix the bridge member to a position of a face of the bridge portion, the flexible material forms a pressure absorption agent for the clamping means adapted for preventing damage against external force on the bridge portion.

Typically, the bridge member further comprises first and second members, the first member comprises a plurality of lens mounting extensions adapted for mounting the first and second lens to the bridge member extended from a face of first member, the second member comprises a plurality of apertures adapted for receiving a plurality of positioning extensions which are extended from a face of the first member such that the first member can be mounted to said second member through the plurality of positioning extensions, the second member further comprises a bridge receiving member adapted for receiving the bridge portion of the eyeglass frame.

Typically, the second member comprises an aperture defining a passage for the second clamping structure to pass through positioned in a central portion of the second member.

Typically, the first and second lens are lens adapted for viewing three-dimensional motion pictures.

Typically, the first and second lens are lens adapted for preventing ultraviolet light from getting through.

Typically, the clamping means further comprises a spring.
Figure 1 shows a front view of the preferred embodiment of the present invention;
Figure 2 shows a rear view of the preferred embodiment of the present invention;
Figure 3 shows a perspective view of the preferred embodiment of the present invention;
Figure 4 shows an exploded view of the preferred embodiment of the present invention;
Figure 5 shows a first exploded view of a clamping means and a bridge member of the preferred embodiment of the present invention;
Figure 6 shows a second exploded view of the clamping means and the bridge member of the preferred embodiment of the present invention;
Figure 7 shows a perspective view of a second member of the bridge member of the preferred embodiment of the present invention;
Figure 8 shows a sectional view of first and second clamping structures of the preferred embodiment of the present invention;
Figure 9a shows a first perspective view of Figure 8;
Figure 9b shows a second perspective view of Figure 8;
Figure 10a is a sectional view of the clamping means in a first position of another embodiment of the present invention; and
Figure 10b is the sectional view of the clamping means in a second position of another embodiment of the present invention;

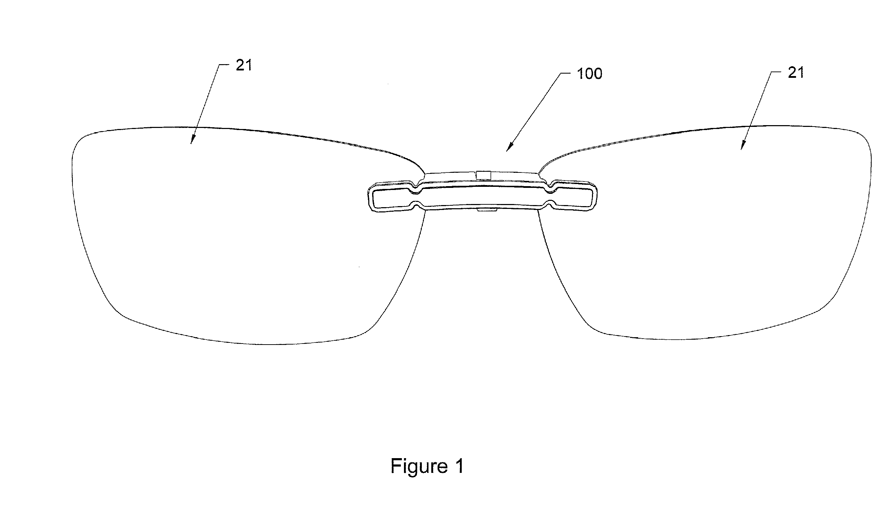

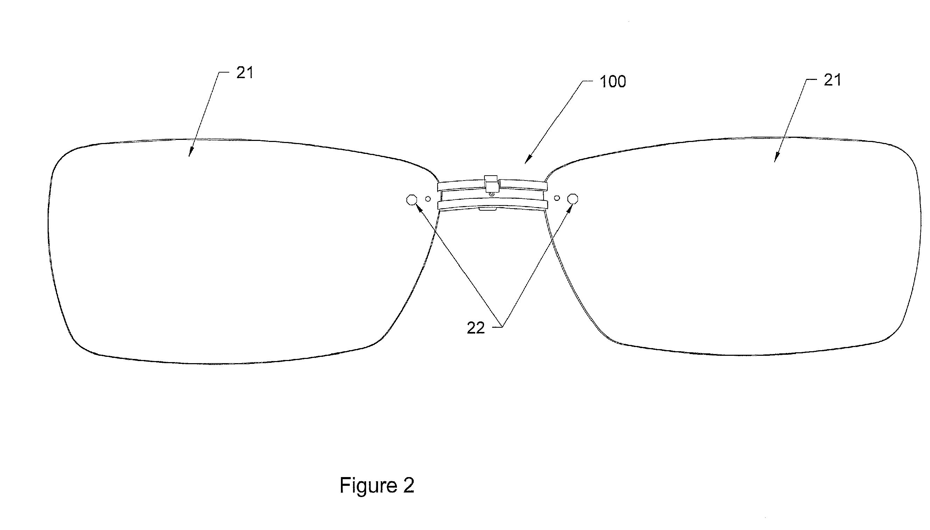

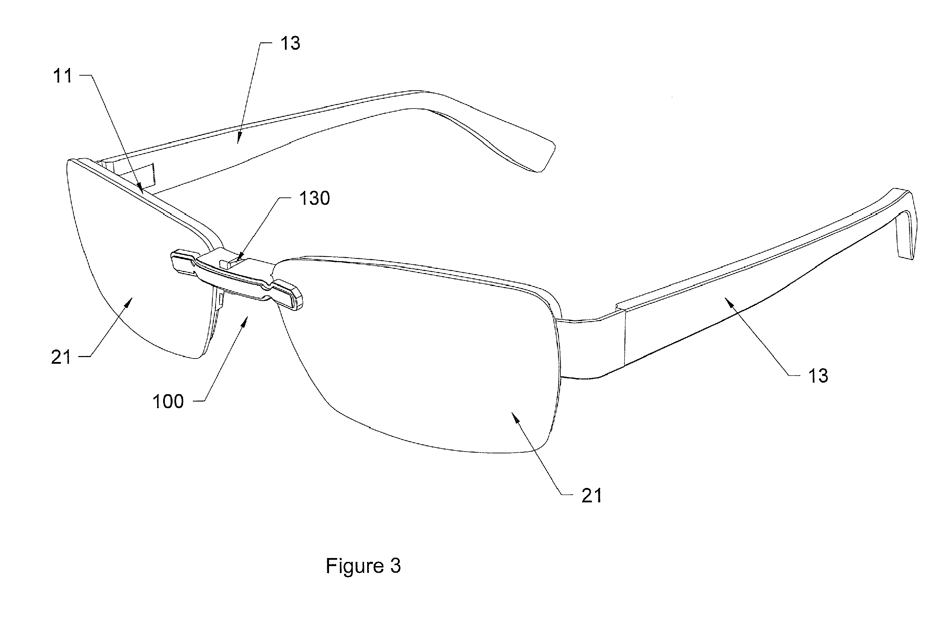

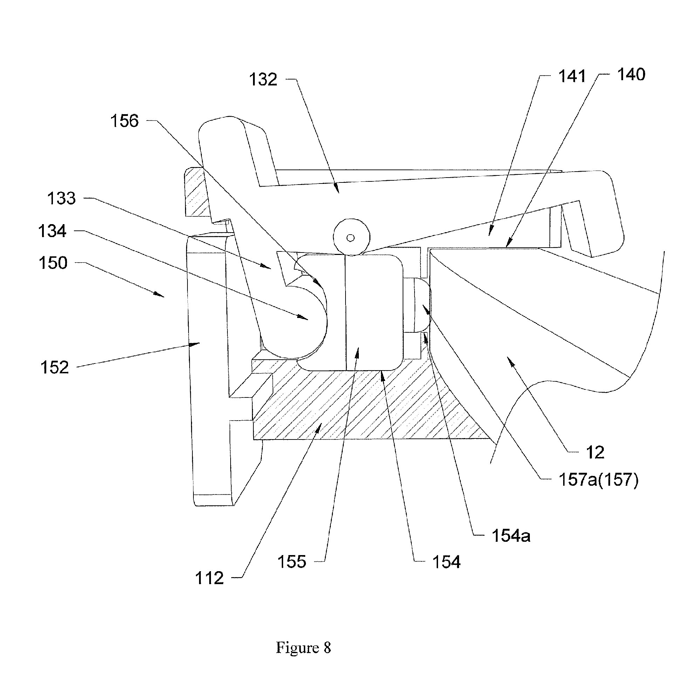

A preferred embodiment of the present invention is described with reference to Figure **1** to Figures 9 a and 9b

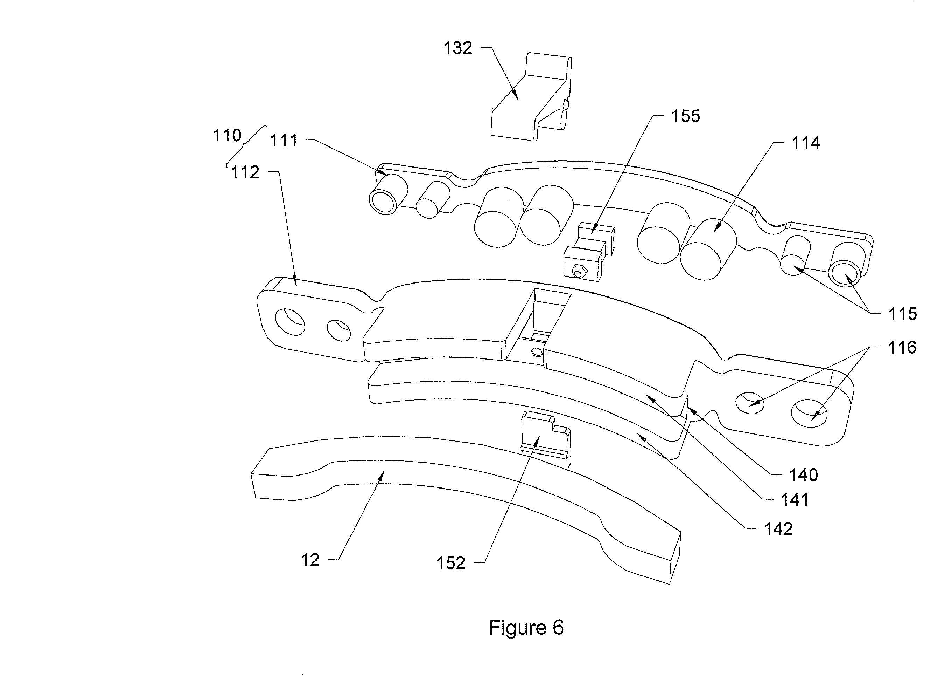

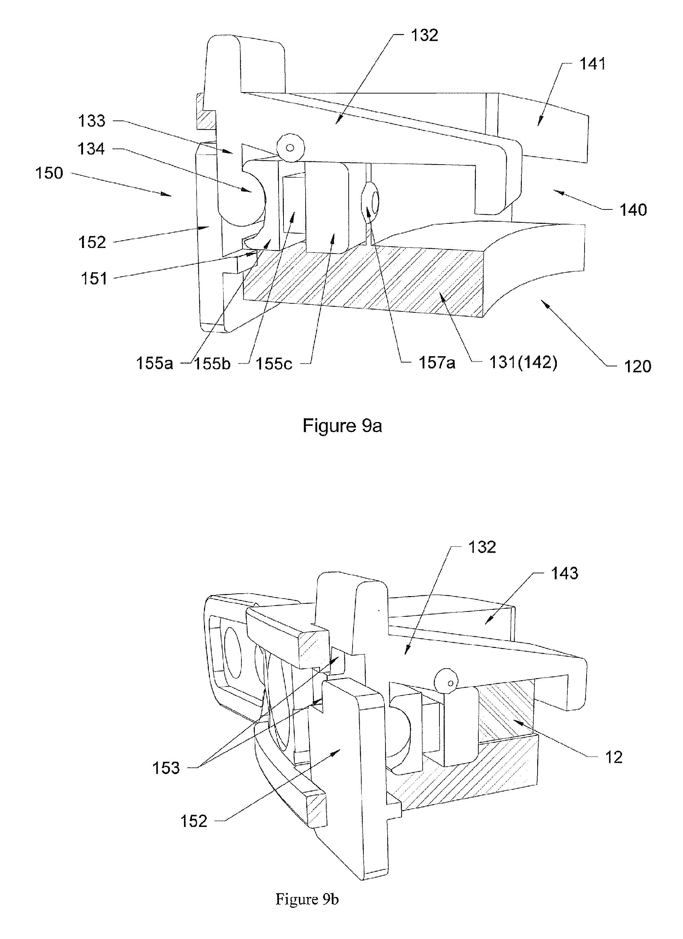

As shown in Figure 1, 2 and 3, mountable glasses comprises two functional lenses or first and second lenses 21 and a bridge member 100 which is mounted between the two functional lenses 21. The functional lenses as mentioned in the present invention can be sunglasses lenses with a lightproof effect, 3D lenses capable of watching three-dimensional motion pictures, reading glasses lenses or other lenses with specific functions. The bridge member 100 comprises a body 110 (see Figure 6) and a clamping means 120 (see Figure 9a). The body 110 is used to fix and connect the two functional lenses 21. The clamping means 120 is used to mount the body 110 onto a bridge of a eyeglasses frame 12 such that the functional lenses 21 can be fixed on the eyeglasses. It enables the functional lenses 21 to mount on one position of the eyeglasses.

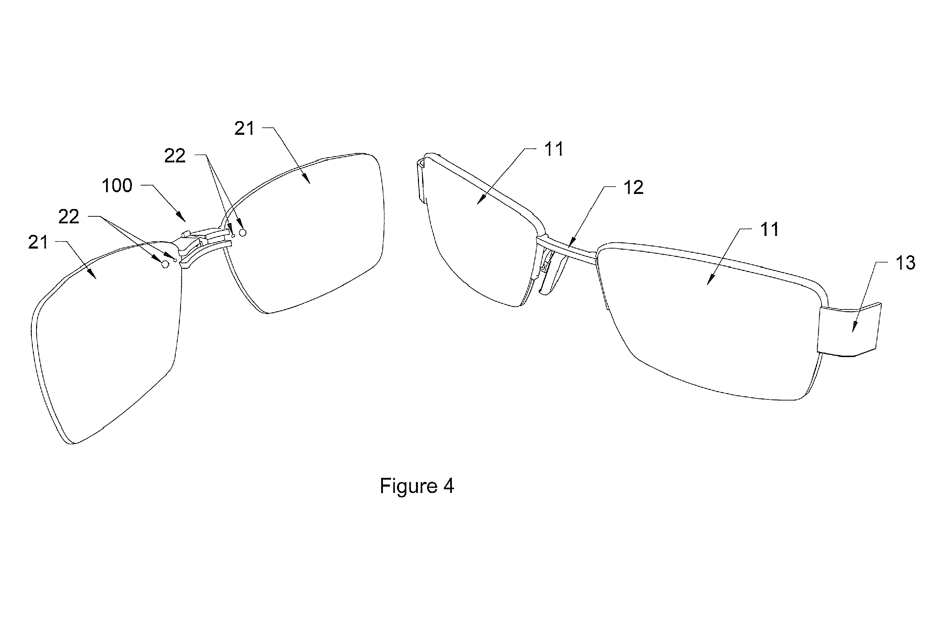

As shown in Figures 4, 5, 6 and 7, the body 110 comprises a first member 111 mounted with a second member 112. Specifically, a convex structure or a lens mounting extension 115 which is received by a hole or an aperture 116 and they are arranged at corresponding positions between the first member 111 and the second member 112. When the convex structure 115 and the hole 116 are received together, the first member 111 and second member 112 can therefore be mounted each other. Through-holes can be arranged at the corresponding positions of the first and second members 111 and 112. The use can use screws and nuts to fix and connect the first member 111 and second member 112 through the through-holes. The first member 111 of the preferred embodiment can be made of titanium alloy such that the body 110 becomes harder and will not be easily broken.

Another through-hole 22 can be arranged at a side of one function lens adjacent to the bridge member 100. Advantageously, the positions of the convex structure 115 and the hole 116 are near the ends of the first member 111 and the second member 112. The convex structure 115 passes through the through-hole 22 and the hole 116 in order to be received together such that the two functional lenses 21 are able to be clamped between the first member 111 and the second member 112. Further, by arranging two sets of the convex structure 115 and the hole 116 on the positions at the ends of the first member 111 and the second members 112 and two corresponding through-holes 22 on the functional lenses 21, the functional lenses 21 can be mounted to the ends of the first member 111 and the second members 112 securely. As such, the body 110 is able to fix and connect the two functional lenses 21 to the mountable glasses.

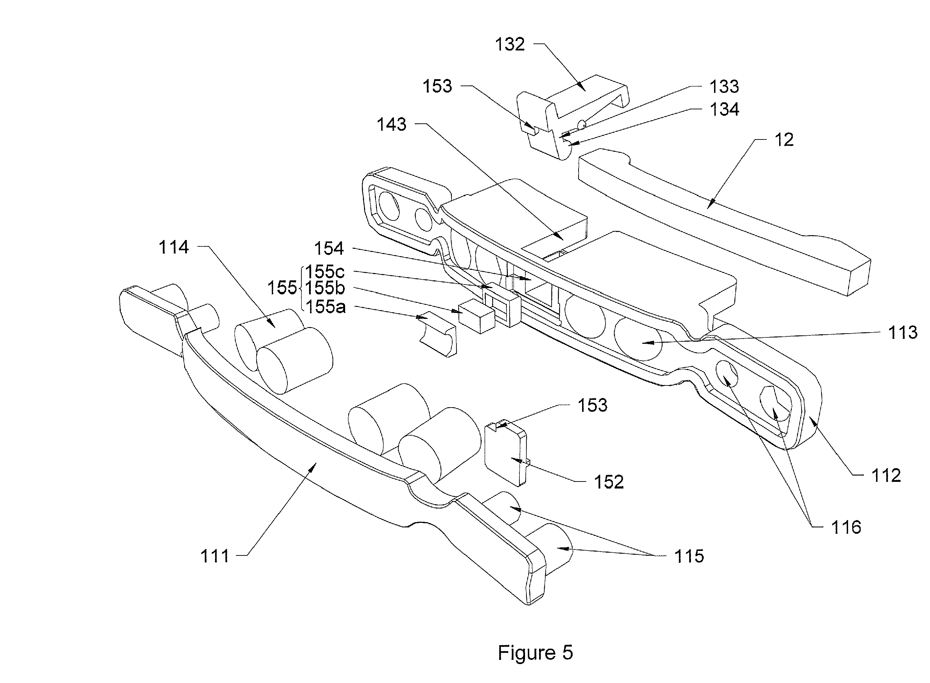

As shown in Figures 5, 6, 7, 8, 9a and 9b, the clamping means 120 comprises the adjustable clamp 130 mounted to the body 110. The adjustable clamp comprises a base structure 131 attached to the body 110, a first clamping structure 132 being mounted to a shaft which is positioned at the middle part of the base structure 131 such that the first clamping structure 132 can be rotated relatively to the base structure 131.

A bridge slot 140 adapted to receive the bridge of the eyeglasses frame is arranged on the base structure 131 such that the bridge slot 140 covering the bridge of the eyeglasses frame can also receive a whole structure of the bridge of the eyeglasses frame. Specifically, the bridge slot 140 is integrally mounted to a rear side of the second member 112. A slot wall 141 at a side of the bridge slot 140 comprises an adjustable clamp gap 143. Another slot wall 142 on another side of the bridge slot 140 forms the base structure 131. The first clamping structure 132 of the adjustable clamp is mounted inside the adjustable clamp gap 143 through a shaft. When the bridge of the eyeglasses frame is put into the bridge slot 140, the first clamping structure 132 can therefore hold the bridge of the eyeglasses frame such that the bridge of the eyeglasses frame can be mounted in a position within the bridge slot 140 in order to be able to fix the mountable glasses on the bridge of the eyeglasses frame 12.

In order to mount the mountable glasses reliably to the bridge of the eyeglasses frame 12, the body 110 comprises the locking mechanism 150 having the first clamping structure 132 of the adjustable clamp.

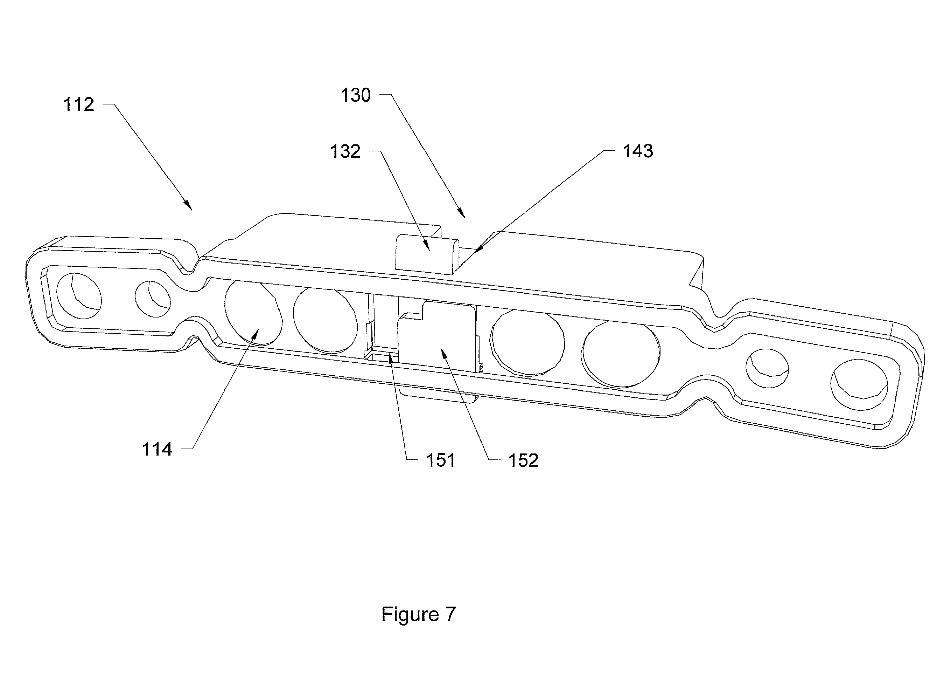

As shown in Figures 7, 8, 9a and 9b, a slide way 151 is arranged at the second member 112 of the body 110. The locking mechanism 150 comprises a sliding member 152 adapted for sliding along the slide way. When the sliding member 152 slides along the slide way 151 to an end of the first clamping structure 132, the first clamping structure 132 is therefore locked and cannot be moved such that the adjustable clamp 130 is firmly clamped on the bridge of the eyeglasses frame 12. When the sliding member 152 is reset, the first clamping structure 132 can move and the adjustable clamp 130 can be detached from the bridge of the eyeglasses frame 12 such that the mountable glasses can be easily removed from the bridge of the eyeglasses frame 12. Further, a concave portion 153 of the first clamping structure 132 is arranged for receiving the sliding member 152. When the concave portion 153 receives the sliding member 152, the first clamping structure 132 cannot be moved. When the sliding member 152 leaves the concave portion 153, the first clamping structure 132 can then be moved.

As shown in Figures 5, 6, 8, 9a, and 9b, a slot bottom of the bridge slot 140 is comprises a slide hole 154 located at a corresponding position of the adjustable clamp gap 143. The slide hole 154 comprises a slide or a second clamping structure 155 adapted to contact with the bridge of the eyeglasses frame. An end of the first clamping structure 132 extends downwardly to a pull rod 133 at an end of the slide 155. When the first clamping structure 132 is pressed down, the pull rod 133 pushes the slide 155 to slide within the slide hole 154. The slide 155 pushes the bridge of the eyeglasses frame 12 out of the slot bottom of the bridge slot 140 such that the mountable glasses can be dismounted effectively.

Preferentially, a step hole 154a is mounted inside the slide hole 154. The slide 155 comprises the concave portion 153 adapted to be received by the step hole 154a. The slide 155 further comprises a front slide or a front second clamping structure 155a, a rear slide or a rear second clamping structure 155b and an elastic cushion or a flexible material 155c which are arranged in a position between the front slide 155a and the rear slide 155b. The front slide 155a is extended from an end of the rear slide 155b and passes through the step hole 154a. This enables the slide 155 to push the bridge 12 to remove from the bridge slot 140 and without applying any external force on the first clamping structure 132, the elastic cushion 155c can push the front slide 155a to slide forward and in turn, it pushes the pull rod in positions to drive the first clamping structure 132 to rotate towards a clamping direction and keep a considerable clamping force such that the clamping will be more reliable. Between the ends of the slide 155 and the pull rod 133, a convex block 156 and a concave slot 157 are arranged, they enable the contacts between the pull rod 133 and the slide 155 to always maintain within the concave slot 157 such that the contacts of the pull rod 133 and the slide 155 will be more reliable.

As shown in Figures 5 and 6, a cavity or a magnet receptacle 113 is arranged in a position between the first member 111 and the second member 112, The cavity 113 comprises a magnet or a cylindrical magnet member 114. When the bridge of the eyeglasses frame which is made of metal 12 is put into the bridge slot 140, under the effect of the magnetic force from the magnet, the bridge 12 will be forced to attach towards the slot bottom of the bridge slot 140 such that the clamping means 120 can be securely mounted on the bridge.

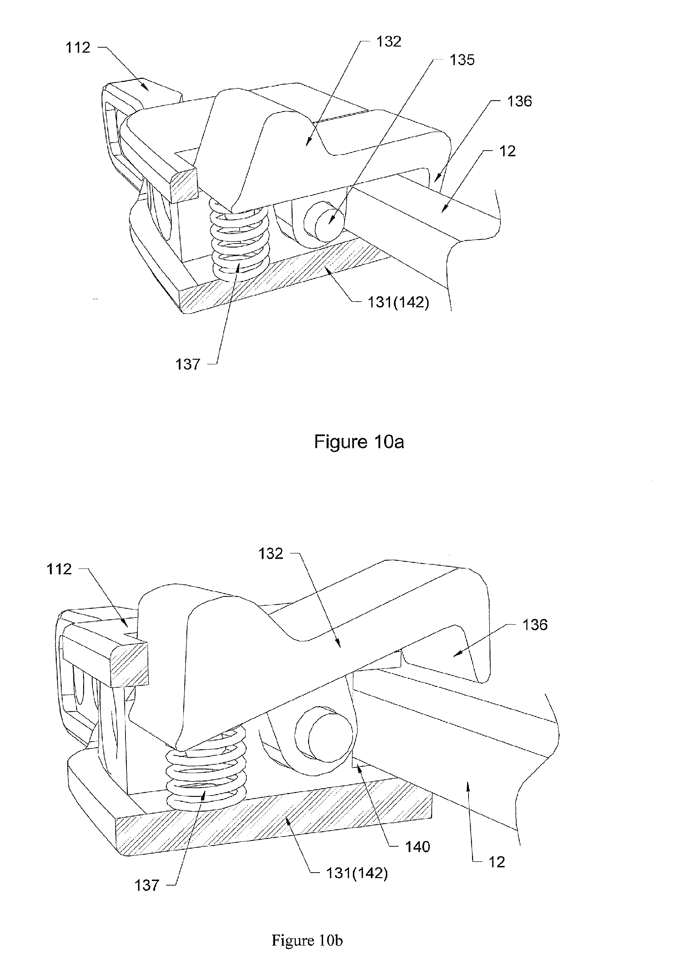

Another embodiment of the present invention is described with reference to Figures 10a and 10b.

In another embodiment, the body comprises a first member 111 and a second member 112 which are fixed together. As shown in Figures 10a and 10b, a clamping means 120 comprises an adjustable clamp 130 positioned on the second member 112. The adjustable clamp comprises a unitary body formed from the base structure 131 and the second member 112. A first clamping structure 132 being connected with a middle part of a base structure 131 by a shaft 135. As such, the first clamping structure 132 can be rotated relative to the base structure 131.

A bridge slot 140 adapted for receiving a bridge of a eyeglasses frame 12 is arranged in a position at the base structure such that the bridge of the eyeglass frame can be received inside the bridge slot 140. Specifically, the bridge slot 140 can be integrally mounted to a rear side of a second member 112. A slot wall 141 positioned on a side of the bridge slot 140 has an adjustable clamp gap adapted for receiving an adjustable clamp 143. Another side slot wall 142 of the bridge slot 140 forms the base structure 131. The shaft of the first clamping structure 132 of the adjustable clamp is mounted within the adjustable clamp gap. Between an end of the first clamping structure and the adjustable clamp gap 143, a spring 137 is arranged. By pressing down the end of the first clamping structure, the spring 137 will be compressed. Then, the first clamping structure will be rotated in one direction relatively to the shaft and the end of the first clamping structure will be moved away from the base structure 131. As such, the bridge of the eyeglass frame can then be put into the bridge slot 140. Alternatively, by releasing the end of the first clamping structure, the spring will then be released. Then, the first clamping structure will be rotated in another direction relatively to the shaft under the effect of the spring. A bent hook 136 is arranged at the end of the first clamping structure can hook the bridge of the eyeglasses frame such that the bridge of the eyeglasses frame can be locked within the bridge slot 140. The mountable glasses can therefore be securely mounted on the bridge of the eyeglasses frame 12.

While specific embodiments of the invention has been shown and described in detail to illustrate the inventive purposes, it will be understood that the invention may be embodied otherwise without departing from said principles.

## Claims

1. A mountable glasses comprising first and second lenses, a bridge member adapted for joining said first and second lenses to form a unitary structure, said bridge member comprising a clamping means for mounting said bridge member to a bridge portion of a eyeglasses frame, **characterized in that** said bridge member further comprises a locking means adapted for keeping said clamping means in a closed position.

2. The mountable glasses according to Claim 1, **characterized in that** said locking means comprises a sliding member adapted for locking said bridge member to said bridge portion of said eyeglasses frame by moving the sliding member from a first position to a second position of said bridge member.

3. The mountable glasses according to Claim 2, **characterized in that** said sliding member is adapted to move along a longitudinal concave region of said bridge member horizontally.

4. The mountable glasses according to Claim 1 or 2, **characterized in that** said bridge member further comprises a first clamping structure having a concave portion for receiving an extension of said sliding member such that said locking means is in a closed position when said locking member receives said extension.

5. The mountable glasses according to any one of the preceding claims, **characterized in that** said clamping means comprises said first clamping structure which is pivotally mounted to said bridge member.

6. The mountable glasses according to any one of the preceding claims, **characterized in that** said bridge member comprises a plurality of magnet receptacles for receiving cylindrical magnet members.

7. The mountable glasses according to Claim 4 or 5, **characterized in that** a first end of said first clamping structure is a convex structure which is adapted to be received by a concave structure of an end of said second clamping structure.

8. The mountable glasses according to any one of the Claims 4 to 7, **characterized in that** a second end of said first clamping structure is a L-shaped structure such that said second end of said first clamping structure can mount said bridge member to said bridge portion of said eyeglasses frame by covering a portion of said bridge portion covered by said L-shaped structure.

9. The mountable glasses according to any one of the preceding claims, **characterized in that** the clamping means further comprises a second clamping structure adapted for mounting said bridge member to a position of said bridge portion of said eyeglass frame removably mounted to said first clamping structure.

10. The mountable glasses according to Claim 8 or 9, **characterized in that** a flexible material having an aperture is mounted to an end of said second clamping structure such that said flexible material can provide a frictional force between contacting faces of said bridge portion of said eyeglasses frame and said first end of said second clamping structure in order to fix said bridge member to a position of a face of said bridge portion, said flexible material forms a pressure absorption agent for said clamping means adapted for preventing damage against external force on said bridge portion.

11. The mountable glasses according to any one of the preceding claims, **characterized in that** said bridge member further comprises first and second members, said first member comprises a plurality of lens mounting extensions adapted for mounting said first and second lens to said bridge member extended from a face of first member, said second member comprises a plurality of apertures adapted for receiving a plurality of positioning extensions which are extended from a face of said first member such that said first member can be mounted to said second member through said plurality of positioning extensions, said second member further comprises a bridge receiving member adapted for receiving said bridge portion of said eyeglass frame.

12. The mountable glasses according to any one of the Claims 8 to 11, **characterized in that** said second member comprises an aperture defining a passage for said second clamping structure to pass through positioned in a central portion of said second member.

13. The mountable glasses according to any one of the preceding claims, **characterized in that** said first and second lens are lens adapted for viewing three-dimensional motion pictures.

14. The mountable glasses according to any one of the preceding claims, **characterized in that** said first and second lens are lens adapted for preventing ultraviolet light from getting through.

15. The mountable glasses according to any one of the preceding claims, **characterized in that** said clamping means further comprises a spring.
